# EUROPÄISCHE PATENTSCHRIFT

(11) **EP 4 056 632 B1**
(45) Veröffentlichungstag und Bekanntmachung des Hinweises auf die Patenterteilung: **25.12.2024**
(21) Anmeldenummer: 22160884.7
(22) Anmeldetag: 08.03.2022
(51) Int. Cl.: C08J 11/12

(54) **VERFAHREN UND ANLAGE ZUR DEPOLYMERISATION VON KUNSTSTOFFMATERIAL**
METHOD AND SYSTEM FOR THE DEPOLYMERISATION OF SYNTHETIC MATERIAL
PROCÉDÉ ET INSTALLATION DE DÉPOLYMÉRISATION DE MATIÈRES PLASTIQUES

(30) Priorität: 10.03.2021 DE 102021105810
(43) Veröffentlichungstag der Anmeldung: 14.09.2022
(73) Patentinhaber: Reschner, Kurt, 01069 Dresden (DE)
(72) Erfinder: Reschner, Kurt, 01069 Dresden (DE)
(74) Vertreter: Riechelmann & Carlsohn Patentanwälte PartG mbB

(56) Entgegenhaltungen:
- EP-B1- 2 233 547
- EP-B1- 2 233 547
- EP-B1- 3 257 644
- WO-A1-2017/064211
- WO-A1-2017/064211
- BE-A- 884 302
- DE-A1- 102010 006 476
- DE-A1- 102010 006 476
- JP-A- H11 106 758
- JP-A- H11 302 663
- JP-A- H11 302 663
- JP-B2- 4 609 947
- US-A- 5 631 346
- US-A1- 2013 023 639
- US-A1- 2015 191 578
- US-B1- 9 556 319

## Beschreibung

Die Erfindung betrifft ein Verfahren zur Depolymerisation von Kunststoffmaterial. Sie betrifft ferner eine Anlage zur Depolymerisation von Kunststoffmaterial.

Weltweit fallen jedes Jahr über 300 Millionen Tonnen Kunststoffabfälle aus Verpackungen an. Hiervon wird nur ein geringer Anteil werkstofflich recycelt. Im Jahr 2018 fielen in Deutschland etwa 3,25 Millionen Tonnen Kunststoffabfälle aus Verpackungen an. Trotz intensiver Bemühungen der deutschen Entsorgungswirtschaft und zahlreicher regulatorischer Maßnahmen stagniert der Anteil des werkstofflichen Recyclings von Kunststoffabfällen in Deutschland seit 10 Jahren bei etwa 46 %. Dies liegt daran, dass die Verpackungsabfälle nicht als sortenreine Polymere, sondern als Mischkunststoffe mit einer Vielzahl verschiedenster Verunreinigungen anfallen. Eine Sortierung und Reinigung ist weder technologisch realisierbar, noch wirtschaftlich sinnvoll.

Um Kunststoffabfälle dennoch einer sinnvollen rohstofflichen Verwertung zuzuführen, wurde in den vergangenen zwanzig Jahren eine Vielzahl von Verfahren des chemischen Recyclings entwickelt. Unabhängig davon, ob diese Verfahren Pyrolyse, Thermolyse, Verölung oder Depolymerisation genannt werden, ist das Wirkprinzip bei fast allen bisher bekannten Verfahren das gleiche: Das Aufgabematerial wird in einem Reaktor unter Luftausschluss auf Temperaturen von 400 °C bis 600 °C erhitzt. Im Reaktor werden die Polymerketten zu Monomeren und Kohlenwasserstoffen unterschiedlicher Länge und Struktur aufgespalten. Das Produkt tritt als Öldampf aus dem Reaktor und wird anschließend entweder in einem Wärmetauscher kondensiert oder in einer Destillationssäule in mehrere Fraktionen unterschiedlicher Siedepunkte getrennt.

Die so erzeugten Kohlenwasserstoffe können entweder in der petrochemischen Industrie als Rohstoff eingesetzt oder in einer Raffinerie zu Kraftstoff weiterverarbeitet werden. Bei den meisten Verfahren entstehen etwa 10 bis 15 % kurzkettige Kohlenwasserstoffe (Leichtsieder) und Gase, welche üblicherweise zur Erzeugung der erforderlichen Prozessenergie eingesetzt werden. Dies erfolgt entweder mittels Brenner, welche die Reaktoren direkt beheizen, oder über Dieselgeneratoren zur Eigenstromerzeugung.

Bei vielen Verfahren werden Katalysatoren und andere Additive eingesetzt, um die Reaktion zu beschleunigen, Säuren zu neutralisieren sowie um die Zusammensetzung des Endproduktes zu beeinflussen.

Die meisten der bisher entwickelten Verfahren zeichnen sich durch eine sehr hohe technologische Komplexität aus, was in der Regel sehr hohe Investitions- und Betriebskosten nach sich zieht und folglich substantielle Hürden für eine breitere kommerzielle Anwendung darstellt. Andere Verfahren wiederum lassen sich im Labor- oder Technikumsmaßstab zuverlässig betreiben, scheitern aber beim Versuch einer wirtschaftlich realisierbaren Maßstabsvergrößerung.

Aus WO 2005/087897 A1 sind ein Verfahren und eine Anlage zur Umwandlung eines Kunststoffmaterials, das aus Kunststoffabfällen stammt, in Dieselkraftstoff bekannt. Die Anlage weist eine Pyrolysekammer auf, aus der Luftsauerstoff mittels eines Spülgases entfernt werden soll. Das Spülgas, bei dem es sich um Stickstoff oder Helium handeln kann, wird in einem Lagerungsbehälter bereitgestellt. Eine Spülung der Pyrolysekammer mit dem Spülgas soll bei jedem Chargenwechsel vorgenommen werden, um ein unbeabsichtigtes Eintreten von Luftsauerstoff in die Pyrolysekammer und die Konzentration des Sauerstoffs darin so weit wie möglich zu minimieren. Dieser Ansatz erfordert sehr hohe Investitions- und Betriebskosten sowie das Vorhalten des Spülgases in großen Tanks. Das in WO 2005/087897 A1 beschriebene Verfahren wird chargenweise betrieben.

Ein Verfahren zur Verflüssigung eines Kunststoffmaterials mit kontinuierlicher Betriebsweise ist aus DE 695 32 712 T2 bekannt. Die kontinuierliche Betriebsweise soll mehrere Doppelschneckenextruder ermöglichen, die kaskadenförmig angeordnet sind. Dabei soll durch die permanente Bewegung der Extruderschnecken eine Verkokung verhindert werden, was einen deutlichen Vorteil gegenüber den oft verwendeten Rührwerksreaktoren oder Drehrohröfen darstellt. Allerdings ist die Abdichtung der Doppelschneckenextruder gegen das Eindringen von Luftsauerstoff in den Extruder und das Austreten von Gasen aus dem Extruder technisch anspruchsvoll.

Aus US 2016/0130505 A1 und WO 2020/008050 A1 sind Verfahren zur Gewinnung von Brennstoffen aus Kunststoffabfällen bekannt, die einen katalytischen Konverter erfordern. Dabei wird ein gasförmiges Material, das in einer Pyrolysekammer aus den Kunststoffabfällen gewonnen wird, zu dem katalytischen Konverter geführt, um die Struktur des gasförmigen Materials zu verändern. Die Verwendung von Extrudern zur Depolymerisation von Kunststoffmaterial ist bekannt, ohne dass ein Planetwalzenextruder oder durch Erhitzen mit Induktionsverfahren verwendet wird (JP H11 106758 A, BE 884 302 A, US 5 631 346 A). Ein induktiv beheizter Extruder ist im Zusammenhang mit der Depolymerisation von Kunststoffmaterial bekannt, jedoch nicht mit einem Planetwalzenextruder (WO 2017/064211 A1, EP 2 233 547 B1, JP H11 302663 A). Die Verwendung einen Planetwalzenextruder zur Behandlung von Kunststoffmaterial ist bekannt, jedoch nicht in Kombination mit Induktionsheizmitteln zur Durchführung der Depolymerisierung (DE 10 2010 006476 A1, US 9 556 319 B1, US 2013/023639 A1, US 2015/191578 A1, EPS 257 644 B1, JP 4 609947 B2).

Die Durchsatzleistung eines Verfahrens zur Depolymerisation von Kunststoffabfällen hängt im Wesentlichen davon ab, in welchem Maße es gelingt, die erforderliche Prozesswärme schnell, sicher und effizient in das Innere des Reaktors zu leiten. Mit anderen Worten, je höher die maximale Wärmestromdichte (Wärmestrom pro m² Wärmeaustauschfläche) ist, desto effizienter ist das Verfahren.

Viele bisher bekannte Verfahren setzen zur Erzeugung von Prozesswärme elektrische Widerstandsheizungen ein. Allerdings beschränkt die hier erforderliche elektrische Isolierung der Heizelemente unweigerlich auch den Wärmestrom erheblich. Ein weiterer Nachteil der elektrischen Widerstandsheizung ist die sehr begrenzte Lebensdauer der Heizmanschetten, was hohe Wartungskosten und häufige Betriebsunterbrechungen zur Folge hat.

Bei einigen Verfahren wird die Prozesswärme über Gas- oder Ölfeuerungen erzeugt. Auch bei diesem Ansatz ist die Wärmestromdichte begrenzt. Darüber hinaus ist die Depolymerisationstemperatur bei Direktbefeuerung nicht präzise steuerbar. Bei Direktbefeuerung kann der Wärmestrom zwar durch wesentlich höhere Temperaturen an der Reaktorwand erhöht werden, dies führt jedoch unweigerlich zu stärkeren Verkokungen im Innenraum des Reaktors.

Es besteht somit der Bedarf an einem technologisch zuverlässigen und kommerziell realisierbaren Verfahren zur Depolymerisation von Mischkunststoffen.

Aufgabe der Erfindung ist es, die Nachteile nach dem Stand der Technik zu beseitigen. Es soll insbesondere ein Verfahren zur Depolymerisation von Kunststoffmaterial, insbesondere von Mischkunststoffen, angegeben werden, das geringeren technologischen Aufwand, höhere technologische Zuverlässigkeit und einen geringeren Energiebedarf aufweist. Ferner soll eine Anlage zur Depolymerisation von Kunststoffmaterial, insbesondere von Mischkunststoffen, angegeben werden, die zur Ausführung des Verfahrens verwendet werden kann.

Diese Aufgabe wird durch die Merkmale der Ansprüche 1 und 10 gelöst. Zweckmäßige Ausgestaltungen der Erfindungen ergeben sich aus den Merkmalen der Unteransprüche.

Nach Maßgabe der Erfindung ist ein Verfahren zur Depolymerisation von Kunststoffmaterial, insbesondere von Mischkunststoffen, vorgesehen, das die folgenden Schritte umfasst:
(a) Schmelzen des Kunststoffmaterials unter Erhalt eines geschmolzenen Materials;
(b) Eintragen des geschmolzenen Materials in einen Planetwalzenextruder;
(c) Erwärmen des geschmolzenen Materials in dem Planetwalzenextruder unter Erhalt von Öldampf; und
(d) Abkühlen des Öldampfes.

Das erfindungsgemäße Verfahren ermöglicht die Depolymerisation von Kunststoffmaterial. Das Verfahren kann ein kontinuierliches Verfahren sein. Der Planetwalzenextruder ist ein Reaktor, in dem die Depolymerisation erfolgt. Die Depolymerisation kann in dem Planetwalzenextruder kontinuierlich erfolgen.

Bei dem Kunststoffmaterial kann es sich um einen Mischkunststoff handeln, beispielsweise einen Mischkunststoff aus Abfallkunststoffen. Unter einem Mischkunststoff wird in einer Ausführungsform ein Gemisch verstanden, das zumindest zwei Kunststoffsorten enthält. Eine Kunststoffsorte unterscheidet sich von einer anderen Kunststoffsorte, wenn sie zumindest eine andere Wiederholungseinheit aufweist. Bei einer Kunststoffsorte kann es sich um ein Homopolymer oder ein Copolymer handeln. Beispiele von Kunststoffsorten umfassen Polyamid, Polycarbonat, Polyethylen, Polyethylenterephthalat, Polypropylen, Polystyrol, Polyurethane, Polyvinylchlorid, Epoxidharze, Phenolharze und Polyesterharze, wobei die Aufzählung nicht abschließend ist.

Unter dem Begriff "Depolymerisation" wird die Zerlegung von Polymeren in Verbindungen mit niedrigeren Molmassen verstanden. Dabei kann das Polymer in seine Monomere zerlegt werden, was jedoch erfindungsgemäß nicht zwingend vorgesehen ist. Es kann vorgesehen sein, dass aus dem Kunststoffmaterial durch Depolymerisation ein Mitteldestillat gewonnen wird. Unter einem Mitteldestillat werden Kohlenwasserstoff-Gemische verstanden, deren Siedebereich bei einer Temperatur von 180 °C bis 360 °C liegt. Die Bedeutung des Begriffes "Mitteldestillat" kann dabei der Bedeutung entsprechen, die er im Zusammenhang mit der Raffination von Rohöl besitzt.

Es kann vorgesehen sein, dass das Kunststoffmaterial vor der Ausführung von Schritt (a) zerkleinert wird. Das ist dann erforderlich, wenn das Kunststoffmaterial nicht bereits als zerkleinertes Kunststoffmaterial vorliegt. Das zerkleinere Kunststoffmaterial weist vorzugsweise eine Partikelgröße von nicht mehr als 50 mm auf. Die Zerkleinerung kann beispielsweise mechanisch erfolgen.

Es kann vorgesehen sein, dass das zerkleinerte Kunststoffmaterial frei von Störstoffen ist oder vor dem Ausführen von Schritt (a) Störstoffe weitgehend abgetrennt werden. Dabei ist es erwünscht, möglichst alle Störstoffe abzutrennen, wobei in der Praxis jedoch eine vollständige Abtrennung der Störstoffe nicht erreichbar ist. Bei den Störstoffen handelt es sich um Materialien, die keine Kunststoffmaterialien sind. Beispiele für Störstoffe sind Metalle, Keramik, Glas, Mineralien und Erde, wobei die Aufzählung nicht abschließend ist. Die Störstoffe können mit Verfahren aus dem Kunststoffmaterial entfernt werden, die aus der Recyclingtechnik bekannt sind. Die Abtrennung der Störstoffe aus dem zerkleinerten Kunststoffmaterial ist vorteilhaft, um den Planetwalzenextruder vor übermäßigem Verschleiß zu schützen.

Schritt (a) sieht das Schmelzen des Kunststoffmaterials unter Erhalt eines geschmolzenen Materials vor. Bei dem Kunststoffmaterial kann es sich um ein zerkleinertes Kunststoffmaterial handeln. Zum Schmelzen des Kunststoffmaterials wird das Kunststoffmaterial vorzugsweise auf eine Temperatur in einem Bereich von 200 bis 250 °C, stärker bevorzugt in einem Bereich von 230 bis 250 °C und besonders bevorzugt auf 250 °C erwärmt. Diese Temperatur wird im Folgenden auch als Vorschmelztemperatur bezeichnet. Das Schmelzen des Kunststoffmaterials kann in einer Einrichtung zum Schmelzen des Kunststoffmaterials, die im Folgen als Schmelzeinrichtung bezeichnet wird, vorgenommen werden. Bei der Schmelzeinrichtung kann es sich beispielsweise um einem Schmelzextruder handeln. Das Kunststoffmaterial kann der Schmelzeinrichtung beispielsweise über einen Aufgabetrichter und eine Dosierschnecke zugeführt werden. Durch das Schmelzen des Kunststoffmaterials können Restfeuchte und/oder leicht flüchtige Bestandteile aus dem Kunststoffmaterial entfernt werden. Die Restfeuchte und/oder die leicht flüchtigen Bestandteile können über eine atmosphärische Entgasung aus dem Schmelzextruder entweichen. Unter dem Begriff "leicht flüchtiger Bestandteil" wird ein Bestandteil verstanden, dessen Siedetemperatur unter oder bei der Vorschmelztemperatur liegt. Bei den "leicht flüchtigen Bestandteilen" kann es sich um organische Verbindungen wie beispielsweise kurzkettige Kohlenwasserstoffe handeln.

In der Schmelzeinrichtung kann das Kunststoffmaterial somit vorgeschmolzen und auf eine Vorschmelztemperatur von bis zu 250 °C erhitzt werden. Über die atmosphärische Entgasung können Restfeuchte, die in dem zerkleinerten Kunststoffmaterial enthalten ist, als Wasserdampf, Luft sowie sonstige flüchtige Bestandteile entweichen, und zwar bereits bevor das Kunststoffmaterial in den als Reaktor dienenden Planetwalzenextruder gelangt.

Es kann vorgesehen sein, dass dem Kunststoffmaterial vor Schritt (a) ein oder mehrere Katalysatoren zugesetzt werden. Bei dem Kunststoffmaterial kann es sich um ein zerkleinertes Kunststoffmaterial handeln. Es kann vorgesehen sein, dass dem Kunststoffmaterial vor Schritt (a) ein oder mehrere Additive zugesetzt werden. Bei dem Kunststoffmaterial kann es sich um ein zerkleinertes Kunststoffmaterial handeln. Unter dem Begriff "Additiv" wird dabei ein Zusatz verstanden, bei dem es sich nicht um einen Katalysator handelt. Katalysatoren und Additive werden im Folgenden gemeinsam als Zusätze bezeichnet. Enthält das Kunststoffmaterial, das in Schritt (a) geschmolzen wird, einen oder mehrere Zusätze, so werden das oder die Zusätze in Schritt (a) homogen in dem schmelzenden Kunststoffmaterial verteilt. Insbesondere kann eine homogene Verteilung des Zusatzes oder der Zusätze in dem schmelzenden Kunststoffmaterial unter Verwendung der Schmelzeinrichtung, beispielsweise des Schmelzextruders, erreicht werden.

Es kann vorgesehen sein, dass aus dem in Schritt (a) erhaltenen geschmolzenen Material Störstoffe, die noch in dem geschmolzenen Material enthalten sind, abgetrennt werden. Bei diesen Störstoffen kann es sich um die obengenannten Störstoffe handeln. In der Praxis handelt es sich bei den Störstoffen, die aus dem geschmolzenen Material abgetrennt werden, um Metallteile, insbesondere kleinere Metallteile, und/oder mineralische Verunreinigungen. Unter einem kleinen Metallteil wird dabei ein Metallteil verstanden, dessen Größe die Größe der Partikel des zerkleinerten Kunststoffmaterials nicht übersteigt. Die Abtrennung der Störstoffe aus dem geschmolzenen Material ist vorteilhaft, um den Planetwalzenextruder vor übermäßigem Verschleiß zu schützen.

Beispielsweise kann das geschmolzene Material zur Abtrennung von Störstoffen zu einem Schmelzefilter geleitet werden. Der Schmelzefilter kann ein kontinuierlich arbeitender Schmelzefilter sein. Das Eintragen des geschmolzenen Materials in den Schmelzefilter kann über eine Rohrleitung erfolgen. Die Rohrleitung kann sich vom Ausgang der Schmelzeinrichtung, an dem das geschmolzene Material aus der Schmelzeinrichtung austritt, bis zum Eingang des Schmelzefilters erstrecken. Das geschmolzene Material kann in den Schmelzefilter bei einer Temperatur eingebracht werden, die der Vorschmelztemperatur entspricht. Das geschmolzene Material kann in dem Schmelzefilter bei einer Temperatur gehalten werden, die der Vorschmelztemperatur entspricht.

Schritt (b) sieht das Eintragen des geschmolzenen Materials in einen Planetwalzenextruder vor. Das Eintragen des geschmolzenen Materials in den Planetwalzenextruder kann über eine Rohrleitung erfolgen. Ist kein Schmelzefilter vorgesehen, so kann sich die Rohrleitung vom Ausgang der Schmelzeinrichtung, an dem das geschmolzene Material aus der Schmelzeinrichtung austritt, bis zum Eingang des Planetwalzenextruders erstrecken. Ist ein Schmelzefilter vorgesehen, so kann sich die Rohrleitung vom Ausgang des Schmelzefilters, an dem das geschmolzene Material aus dem Schmelzefilter austritt, bis zum Eingang des Planetwalzenextruders erstrecken. Das geschmolzene Material kann in den Planetwalzenextruder bei einer Temperatur eingebracht werden, die der Vorschmelztemperatur entspricht.

Schritt (c) sieht das Erwärmen des geschmolzenen Materials in dem Planetwalzenextruder unter Erhalt von Öldampf vor. Dabei wird das geschmolzene Material auf eine Temperatur erwärmt, die über der Vorschmelztemperatur liegt. Die Temperatur, auf die das geschmolzene Material in dem Planetwalzenextruder erwärmt wird, wird im Folgenden auch als Depolymerisationstemperatur bezeichnet. Beispielsweise kann in dem Planetwalzenextruder das geschmolzene Material auf eine Temperatur in einem Bereich von 380 bis 600 °C, bevorzugt 450 bis 480 °C erwärmt werden. Die Erhöhung der Temperatur auf die Depolymerisationstemperatur sorgt für eine Depolymerisation des geschmolzenen Materials. Dabei wird aus dem geschmolzenen Material ein Öldampf erhalten. Bei dem Öldampf kann es sich um ein Gemisch verschieden großer Kohlenwasserstoffmoleküle handeln. Die Kohlenwasserstoffmoleküle können unterschiedlich strukturiert sein.

Die Erwärmung kann mittels induktiver Beheizung des Planetwalzenextruders erfolgen. Es kann zumindest ein Induktor vorgesehen sein, der Energie auf das in dem Planetwalzenextruder befindliche Material überträgt. Beispielsweise kann der Induktor einen Wärmestrom von 10 bis 100 kW auf die Reaktorwand des Planetwalzenextruders übertragen. Dieser, durch die induktive Beheizung erzeugte sehr hohe Wärmestrom ermöglicht es, das in den Planetwalzenextruder eingetragene geschmolzene Material sehr schnell auf die Depolymerisationstemperatur zu erwärmen. Der Induktor kann eine oder mehrere Induktionsspulen aufweisen. Die Induktionsspule(n) können konzentrisch um die Außenwand des Planetwalzenextruders gewickelt sein oder als Manschetten, beispielsweise als geteilte Manschetten, ausgeführt sein.

Die Verwendung eines Planetwalzenextruders ermöglicht eine Durchmischung des in ihn eingebrachten geschmolzenen Materials. Außerdem ermöglicht der Planetwalzenextruder einen kontinuierlichen Transport des in ihn eingebrachten geschmolzenen Materials. Der erfindungsgemäß vorgesehene Planetwalzenextruder ermöglicht eine kontinuierliche Betriebsweise des erfindungsgemäßen Verfahrens. Das erfindungsgemäße Verfahren ist somit ein kontinuierliches Verfahren.

In dem erfindungsgemäß vorgesehenen Planetwalzenextruder kann der Öldampf als Teil eines Gemisches anfallen. Dieses Gemisch enthält neben dem Öldampf noch eine weitere Komponente. Diese weitere Komponente ist vorwiegend fest oder pastös. Diese Komponente hat in der Regel nur einen geringen Gewichtsanteil an dem Gemisch. Typischerweise beträgt der Anteil der weiteren Komponente nicht mehr als 10 Gew.-%, bezogen auf das Gemisch, in der Regel liegt der Anteil zwischen 5 und 10 Gew.-%, jeweils bezogen auf das aus dem Planetwalzenextruder austretende Gemisch. Bei der weiteren Komponente kann es sich um eine Schlacke handeln, die beispielsweise nicht verdampfte Feststoffe und/oder Bitumen enthält oder daraus besteht. Es kann vorgesehen sein, dass das Gemisch im Anschluss an Schritt (c) und vor Schritt (d) in eine Trenneinrichtung zur Abtrennung des Öldampfes aus dem Gemisch geführt wird. Bei der Trenneinrichtung kann es sich um eine Trennkammer handeln. Die Trennkammer kann unmittelbar am Ausgang des Planetwalzenextruders angeordnet sein, so dass das Gemisch, das den Planetwalzenextruder verlässt, unmittelbar in die Trennkammer eintritt. In der Trennkammer wird die weitere Komponente von dem Öldampf getrennt. Die abgetrennte weitere Komponente kann mittels einer Transportvorrichtung, beispielsweise mittels einer gekühlten Schnecke, aus der Trennkammer ausgetragen werden. In der Trennkammer wird eine Phasentrennung erreicht, weil der Öldampf als Gasphase vorliegt, während die anderen Komponenten des Gemisches als Fest/Flüssig-Phase, bei der es sich um eine vorwiegend feste Phase handelt, vorliegen. Es kann alternativ oder zusätzlich vorgesehen sein, dass die Gasphase oder ein Teil davon an einem oder mehreren Auslässen ausgeleitet wird, die entlang des Planetwalzenextruders in dessen äußerem Zylinder ausgebildet sind.

Im Hinblick auf die Depolymerisationstemperatur ist es für die Anlagen- und Betriebssicherheit essenziell, dass sowohl ein unbeabsichtigtes Eindringen von Luftsauerstoff in den Planetwalzenextruder als auch ein Austreten von entzündlichen Flüssigkeiten und Gasen zuverlässig verhindert wird. Im Gegensatz zu herkömmlichen Reaktoren, die zur Depolymerisation von Kunststoffmaterial eingesetzt werden, stellt die Abdichtung der Antriebswelle des Planetwalzenextruders keine besondere technologische Herausforderung dar. Das ist darauf zurückzuführen, dass das in den Planetwalzenextruder eintretende Material von der Wellendichtung weg in Richtung Austrag befördert wird. Anders als bei vielen Rührwerksreaktoren ist die Wellendichtung weder hohen Drücken noch hohen Temperaturen ausgesetzt. Ist eine Trennkammer vorgesehen, so ist der Übergang vom Planetwalzenextruder zur Trennkammer konstruktionsbedingt offen. Es gibt dort keine beweglichen Teile, die nach außen abgedichtet werden müssen. Der Austrag der geringen Menge an Schlacke erfolgt zweckmäßigerweise im unteren Bereich der Trennkammer, vorzugsweise über eine gekühlte Schnecke.

Das bei allen bekannten Verfahren zur Depolymerisation von Kunststoffabfällen häufige Problem von Verkokungen an der Reaktorwand wird bei der Verwendung eines Planetwalzenextruders vermieden. Eine Verkokung hat eine verminderte Wärmeübertragung, einen hohen Wartungsaufwand und häufige Stillstandzeiten der Anlage zur Folge. Die erfindungsgemäße Verwendung eines Planetwalzenextruders als Reaktor zur Depolymerisation von Kunststoffmaterial hat auch im Hinblick auf die Verhinderung von Verkokungen wesentliche Vorteile gegenüber allen anderen Extrudertypen.

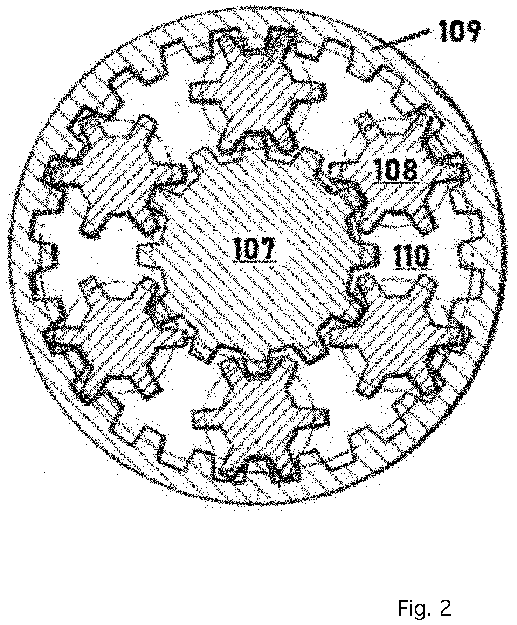

Der Planetwalzenextruder wurde Anfang der 1950er Jahre erfunden und wird heute als kontinuierlicher Mischer und/oder Reaktor in einer Vielzahl verschiedenster Branchen eingesetzt, u. a. in der chemischen Industrie, in Gummimischanlagen, bei der Herstellung von Lacken und Farben und in der Lebensmittelindustrie. Ein Planetwalzenextruder weist einen äußeren Zylinder auf, in dem eine Zentralspindel und zumindest drei Planetspindeln angeordnet sind. Diese Bauteile sind schräg verzahnt und greifen ineinander. Der mechanische Antrieb erfolgt über die Zentralspindel, die auch als Antriebsspindel bezeichnet wird und die Planetspindeln antreibt. Die Planetspindeln wiederum drehen sich um sich selbst und wandern gleichmäßig entlang der Innenwand des Zylinders (siehe auch Fig. 2, unten). Die Außenwand des Zylinders bildet die Außenwand des Planetwalzenextruders. Der Planetwalzenextruder weist vorzugsweise drei bis zwölf Planetspindeln auf. Er kann mehr als zwölf Planetspindeln aufweisen, was jedoch nicht bevorzugt ist. Vorzugsweise weist der Planetwalzenextruder 3 bis 9, stärker bevorzugt 4 bis 8 und besonders bevorzugt 5 bis 7 Planetspindeln auf. In einer Ausführungsform weist er sechs Planetspindeln auf.

Die permanente Drehbewegung der Planetspindeln verhindert nicht nur sehr zuverlässig jegliche Verkokung an der Innenwand des Zylinders, sondern gewährleistet auch einen außerordentlich schnellen Transport der Prozesswärme von der Außenwand des Zylinders in das Innere des Planetwalzenextruders. Dank der permanenten und sehr intensiven Durchmischung des in den Planetwalzenextruder eingetragenen geschmolzenen Materials können mit dem Planetwalzenextruder sehr hohe Wärmeströme von der Außenwand des Zylinders in das Innere des Planetwalzenextruders transportiert werden. Darüber hinaus begünstigt die permanente Durchmischung des in den Planetwalzenextruder eingetragenen geschmolzenen Materials eine konstante und gleichmäßige Gasbildung im Planetwalzenextruder. Die konstante und gleichmäßige Strömung der Gasphase ist für einen stabilen Betrieb der gesamten Anlage von großem Vorteil. Das in den Planetwalzenextruder eingetragene geschmolzene Material kann mittels der schräg verzahnten Planetspindeln intensiv durchmischt und kontinuierlich nach vorn, d. h. zum Ausgang aus dem Planetwalzenextruder hin, transportiert werden.

Es kann vorgesehen sein, dass in dem Planetwalzenextruder zwei oder mehr Reaktionszonen ausgebildet sind. Es können eine, mehrere oder alle der folgenden Reaktionszonen vorgesehen sein:
(i) Aufwärmzone. Die Aufwärmzone ist eine Reaktionszone, in der das Aufgabematerial auf die Depolymerisationstemperatur gebracht wird. In der Aufwärmzone kann auch eine Vakuumentgasung vorgesehen sein. Ferner können in der Aufwärmzone ein oder mehrere seitliche Einträge für Zusätze, vorzugsweise für Additive, vorgesehen sein.
(ii) Depolymerisationszone. Die Depolymerisationszone ist eine Reaktionszone, in der die Polymerketten in kürzere Moleküle gespalten werden. Diese Reaktion ist endotherm, die erforderliche Reaktionsenergie wird über Induktoren zugeführt. In der Depolymerisationszone herrscht die Depolymerisationstemperatur. Unter einem kürzeren Molekül wird ein Molekül verstanden, das eine geringere Anzahl an Kohlenstoffatomen aufweist als die gespaltene Polymerkette. Bei den kürzeren Molekülen kann es sich insbesondere um Kohlenwasserstoffmoleküle handeln
(iii) Verdampfungszone. Die Verdampfungszone ist eine Reaktionszone, in der die in der Depolymerisationszone erhaltenen kürzeren Kohlenwasserstoffmoleküle zu einem Öldampf verdampfen. In der Depolymerisationszone herrscht die Depolymerisationstemperatur.
(iv) Austragszone. Die Austragszone ist eine Reaktionszone, in der das Material, das in diese Reaktionszone eingetragen wird, größtenteils Öldampf ist. Falls eine oder mehrere Trennkammern vorgesehen sind, kann der Öldampf aufgrund des Dampfdrucks in Richtung der Trennkammer(n) strömen. Der geringe Anteil an Feststoffen bzw. Schlacke wird aufgrund der permanenten Drehbewegung der Zentralspindel und der Planetspindeln ebenfalls in Richtung der Trennkammer(n) transportiert.

Vorzugsweise gelangt das geschmolzene Material, wenn es in Schritt (c) in den Planetwalzenextruder eintritt, in die Aufwärmzone, in der es auf die Depolymerisationstemperatur erwärmt wird, wodurch ein erwärmtes geschmolzenes Material erhalten wird. Aus der Aufwärmzone tritt das erwärmte geschmolzene Material in die Depolymerisationszone ein, in der das erwärmte geschmolzene Material gespalten und verflüssigt wird, wodurch ein gespaltenes und verflüssigtes Material erhalten wird. Aus der Depolymerisationszone tritt das gespaltene und verflüssigte Material in die Verdampfungszone ein, in der das gespaltene und verflüssigte Material zu einem Öldampf verdampft. Aus der Verdampfungszone tritt der Öldampf in die Austragszone ein. Über die Austragszone kann der Öldampf den Planetwalzenextruder verlassen oder zu einer Trennkammer geführt werden.

Der Planetwalzenextruder kann zwei oder mehr Segmente aufweisen, wobei vier Segmente vorgesehen sein können. Es kann vorgesehen sein, dass der Planetwalzenextruder eine Aufwärmzone, eine an die Aufwärmzone angrenzende Depolymerisationszone, eine an die Depolymerisationszone angrenzende Verdampfungszone und eine an die Verdampfungszone angrenzende Austragszone aufweist. Der Planetwalzenextruder kann für jede Reaktionszone ein Segment aufweisen. Beispielsweise kann der Planetwalzenextruder ein erstes Segment für die Aufwärmzone, ein zweites Segment für die Depolymerisationszone, ein drittes Segment für die Verdampfungszone und ein viertes Segment für die Austragszone aufweisen. Das zweite Segment grenzt mit seiner ersten Stirnseite an eine Stirnseite des ersten Segmentes an. Das dritte Segment grenzt mit seiner ersten Stirnseite an die zweite Stirnseite des zweiten Segmentes an. Das vierte Segment grenzt mit seiner ersten Stirnseite an die zweite Stirnseite des dritten Segmentes an. Die Segmente können gleiche oder unterschiedliche Zahlen an Planetspindeln aufweisen. Die Segmente können eine gemeinsame Zentralspindel aufweisen. Ist eine Trennkammer vorgesehen, so kann die Trennkammer an die zweite Stirnseite des vierten Segmentes angrenzen.

Durch eine Anpassung der Anzahl der Planetspindeln können die Verarbeitungseigenschaften beeinflusst werden. Bei einer minimalen Anzahl von Planetspindeln wird das Füllvolumen des Planetwalzenextruders und somit die Verweildauer des Materials in dem Planetwalzenextruder erhöht. Hingegen wird bei sechs oder mehr Spindeln sowohl die Mischintensität als auch die Wärme- und Stoffübertragung maximiert. Der Planetwalzenextruder kann modular aufgebaut sein, so dass die Anzahl der Planetspindeln entsprechend den Erfordernissen der jeweiligen Reaktionszone angepasst werden kann.

Es ist bekannt, dass durch die Zugabe eines oder mehrerer Katalysatoren die Reaktionstemperatur der Depolymerisation in dem Planetwalzenextruder reduziert und/oder die Reaktionsgeschwindigkeit der Depolymerisation in dem Planetwalzenextruder erhöht werden kann. Ein Beispiel eines Katalysators ist ein Zeolith. Durch die Zugabe von Alkalibildnern können bei der Depolymerisation freiwerdende Halogenund Schwefelverbindungen gebunden und inertisiert werden. Durch die Zugabe von Wasserstoffspendern kann die Zusammensetzung der in dem Planetwalzenextruder entstehenden Kohlenwasserstoffe maßgeblich beeinflusst werden. Alkalibildner und Wasserstoffspender sind Beispiele für Additive. Aufgrund der sehr intensiven Mischwirkung des Planetwalzenextruders werden der oder die Katalysatoren und/oder das oder die Additive schnell und gleichmäßig im Innenraum des Planetwalzenextruders verteilt. Sie können daher auch bei sehr geringen Mengen ihre beabsichtigte Wirkung entfalten. Durch die permanente Drehbewegung sind alle Bauteile des Planetwalzenextruders selbstreinigend und verfügen stets über eine metallisch saubere und katalytisch aktive Oberfläche.

Die Wandung des Zylinders ist vorzugsweise aus einem warmfesten, hochlegierten Stahl hergestellt. Eine oder mehrere Planetspindeln können aus einem katalytisch wirkenden Material bestehen. Es können alle Planetspindeln aus einem katalytisch wirkenden Material bestehen. Anders als bei den aus US 2016/0130505 A1 und WO 2020/008050 A1 bekannten Verfahren ist kein nachgeschalteter Katalysator erforderlich, vielmehr wirkt der Planetwalzenextruder selbst katalytisch.

Erfindungsgemäß kann in Schritt (c) eine induktive Beheizung vorgesehen sein. Auf diese Weise kann der hohe Bedarf an thermischer Energie, der für die Depolymerisation von Kunststoffmaterial, insbesondere von Mischkunststoffen erforderlich ist, gedeckt werden. Die induktive Beheizung kann durch induktives Beheizen der Außenwand des Zylinders des Planetwalzenextruders erfolgen. Es kann vorgesehen sein, dass für jedes Segment des Planetwalzenextruders eine gesonderte induktive Beheizung vorgesehen ist. Beispielsweise kann für jedes Segment eine Induktionsspule oder Manschette vorgesehen sein.

Das Prinzip der induktiven Wärmeerzeugung ist seit vielen Jahren bekannt und wird bereits in einer Vielzahl von Anwendungen, beispielsweise Haushaltsherden, Küchenmaschinen, Wärmebehandlung von Metallen, Löten und Schweißen, eingesetzt. Aufgrund seiner zylindrischen Bauform eignet sich der Planetwalzenextruder besonders gut für eine induktive Beheizung. Anders als bei Reaktoren mit komplexen Geometrien ist es bei dem erfindungsgemäß vorgesehenen Planetwalzenextruder möglich, dass eine oder mehrere Induktionsspulen konzentrisch um die Außenwand des Planetwalzenextruders gewickelt sind. Die Induktionsspulen können auch als eine oder mehrere Manschetten, beispielsweise als teilbare Manschetten, ausgebildet sein.

Mit der induktiven Beheizung des Planetwalzenextruders können Wärmestromdichten von bis zu 70 kW/m² und somit ein Vielfaches jeder anderen bisher verwendeten Beheizungsart erreicht werden. Der einzige begrenzende Faktor für die Wärmestromdichte ist die Temperaturdifferenz zwischen der Außenwand des Zylinders des Planetwalzenextruders und der Depolymerisationstemperatur sowie der Wärmeleitfähigkeit des Stahls, aus dem der Zylinder besteht.

Im Gegensatz zu anderen Methoden zur Prozesswärmeerzeugung ist die induktive Beheizung so gut wie wartungsfrei. Dadurch entfallen die bei anderen Verfahren häufigen Stillstandszeiten und nicht unerheblichen Wartungskosten. Ein induktiv beheizter Planetwalzenextruder ermöglicht somit einen sicheren und wirtschaftlichen Betrieb mit außerordentlich hohen Wärmestromdichten und Durchsatzleistungen.

Schritt (d) sieht das Abkühlen des Öldampfes vor. Schritt (d) kann zur Kondensation des Öldampfes dienen. Durch das Abkühlen und Kondensieren des Öldampfes kann ein Öl erhalten werden. Bei dem Öl kann es sich um das Mitteldestillat handeln. Zum Abkühlen kann eine Kühleinrichtung vorgesehen sein. Bei der Kühleinrichtung kann es sich beispielsweise um einen Wärmetauscher, einen Kondensator, eine Destillationskolonne oder einen Quench-Kühler handeln. Bei dem Kondensator kann es sich um einen Immersionskondensator handeln. In Schritt (d) wird der Öldampf auf eine Temperatur abgekühlt, die unter der Depolymerisationstemperatur liegt. Die Temperatur, auf die der Öldampf in Schritt (d) abgekühlt wird, wird im Folgenden auch als Abkühltemperatur bezeichnet. Die Abkühltemperatur kann von der weiteren Verwendung des Öldampfes oder des Öles abhängen. Es kann vorgesehen sein, dass der Öldampf in Schritt (d) auf Raumtemperatur abgekühlt wird. Alternativ kann vorgesehen sein, dass der Öldampf in Schritt (d) auf eine Temperatur abgekühlt wird, die in einem Bereich von 250 bis 300 °C liegt.

Bei dem Teil des Öldampfes, der beim Abkühlen nicht kondensiert, kann es sich um ein Gas und/oder einen Dampf von Leichtsiedern handeln. Beim Gas handelt es sich um sehr kurzkettige Kohlenwasserstoffe (C1 bis C4). Unter Leichtsiedern werden Kohlenwasserstoff-Gemische in einem Bereich von C5 bis C10 mit einem Siedebereich von 35 °C bis 210 °C verstanden. Das aus der Kühleinrichtung austretende Gemisch aus Gas und Leichtsiedern kann beispielsweise zur Eigenstromerzeugung in einem Dieselgenerator genutzt werden.

Die Abkühltemperatur definiert den Trennpunkt zwischen dem Öl und den Leichtsiedern. Substanzen, die oberhalb der Abkühltemperatur sieden, gehören zum Mitteldestillat. Substanzen, die unterhalb oder bei der Abkühltemperatur sieden, sind Leichtsieder.

Nach Maßgabe der Erfindung ist ferner eine Anlage zur Depolymerisation von Kunststoffmaterial vorgesehen. Die erfindungsgemäße Anlage ist insbesondere zur Ausführung des erfindungsgemäßen Verfahrens geeignet. Die erfindungsgemäße Anlage kann kontinuierlich betrieben werden.

Die Anlage weist einen Planetwalzenextruder zur Erwärmung des Kunststoffmaterials unter Erhalt von Öldampf auf. Vorzugsweise ist das Kunststoffmaterial, das in dem Planetwalzenextruder unter Erhalt von Öldampf erwärmt wird, ein geschmolzenes Material. Das geschmolzene Material wird, wie bereits im Zusammenhang mit dem erfindungsgemäßen Verfahren beschrieben wurde, durch Schmelzen des Kunststoffmaterials bei der Vorschmelztemperatur erhalten. Das Kunststoffmaterial ist vorzugsweise ein zerkleinertes Kunststoffmaterial. In den Planetwalzenextruder wird vorzugsweise ein geschmolzenes Material eingebracht, das durch Schmelzen eines zerkleinerten Kunststoffmaterials bei der Vorschmelztemperatur unter Erhalt des geschmolzenen Materials erhalten wurde.

Der Planetwalzenextruder kann eine induktive Beheizung aufweisen. Dazu kann die erfindungsgemäße Anlage zumindest einen Induktor aufweisen. Der Planetwalzenextruder kann einen Zylinder aufweisen, in dem eine Zentralspindel und zumindest drei Planetspindeln angeordnet sind. An der Außenwand des Zylinders können zur induktiven Erwärmung des Planetwalzenextruders eine oder mehrere Induktionsspulen oder Manschetten angeordnet sein.

Die erfindungsgemäße Anlage kann eine Einrichtung zum Schmelzen des Kunststoffmaterials vor dessen Eintritt in den Planetwalzenextruder aufweisen. Diese Einrichtung wird auch als Schmelzeinrichtung bezeichnet. Bei der Schmelzeinrichtung kann es sich beispielsweise um einen Schmelzextruder handeln. Die erfindungsgemäße Anlage kann ferner eine Kühleinrichtung zum Abkühlen des Öldampfes aufweisen. Bei der Kühleinrichtung kann es sich beispielsweise um einen Wärmetauscher, einen Kondensator, eine Destillationskolonne oder einen Quench-Kühler handeln.

Weitere Einzelheiten der erfindungsgemäßen Anlage sind bereits im Zusammenhang mit dem erfindungsgemäßen Verfahren beschrieben worden. Auf die Beschreibung des erfindungsgemäßen Verfahrens wird daher verwiesen.

Die Erfindung wird nachstehend anhand von Ausführungsbeispielen, die die Erfindung nicht einschränken sollen, unter Bezugnahme auf die Zeichnungen näher erläutert. Dabei zeigen
- Fig. 1: ein Ablaufschema zur Veranschaulichung einer ersten Ausführungsform des erfindungsgemäßen Verfahrens und der erfindungsgemäßen Anlage;
- Fig. 2: eine schematische Schnittdarstellung einer Ausführungsform eines Planetwalzenextruders einer erfindungsgemäßen Anlage; und
- Fig. 3: ein Ablaufschema zur Veranschaulichung einer zweiten Ausführungsform des erfindungsgemäßen Verfahrens und der erfindungsgemäßen Anlage.

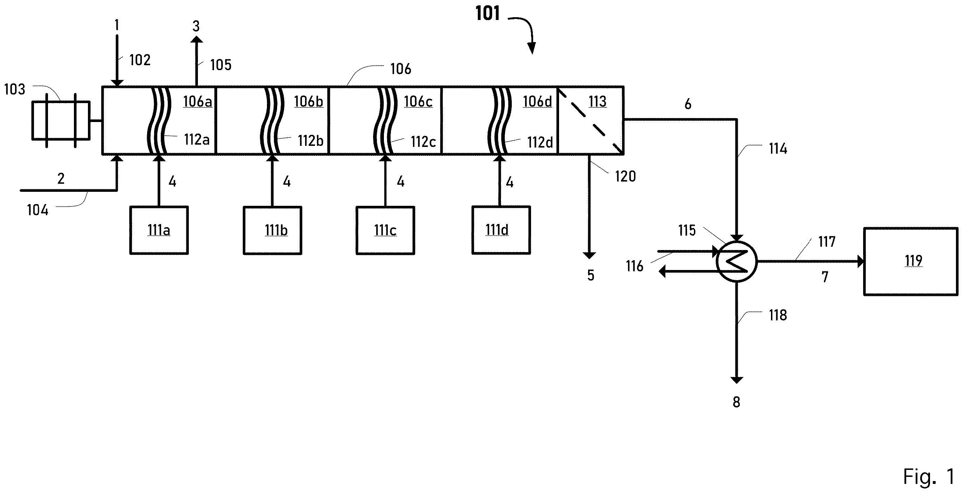

Die in Fig. 1 schematisch gezeigte erste Ausführungsform einer erfindungsgemäßen Anlage 101 weist einen Planetwalzenextruder 106 auf, welcher vier Segmente 106a, 106b, 106c, 106d aufweist. Bei den Segmenten 106a, 106b, 106c, 106d kann es sich um Module handeln. In dem ersten Segment 106a ist die Aufwärmzone ausgebildet, in dem zweites Segment 106b die Depolymerisationszone, in dem dritten Segment 106c die Verdampfungszone und in dem vierten Segment 106d die Austragszone. Das zweite Segment 106b grenzt mit seiner ersten Stirnseite an eine Stirnseite des ersten Segmentes 106a an. Das dritte Segment 106c grenzt mit seiner ersten Stirnseite an die zweite Stirnseite des zweiten Segmentes 106b an. Das vierte Segment 106d grenzt mit einer Stirnseite an die zweite Stirnseite des dritten Segmentes 106c an. Die vier Segmente 106a, 106b, 106c, 106d weisen jeweils sechs Planetspindeln 108 auf, die von einer gemeinsamen Zentralspindel 107 angetrieben werden (siehe Fig. 2). Die Anlage 101 weist einen Antrieb 103 für die Zentralspindel 107 auf. Zwischen benachbarten Planetspindeln 108 eines Segmentes 106a, 106b, 106c, 106d befindet sich jeweils ein Zwischenraum. Die Zwischenräume bilden gemeinsam den Innenraum 110 des Planetwalzenextruders 106.

Die Innenräume der Segmente 106a, 106b, 106c, 106d bilden gemeinsam den Innenraum 110 des Planetwalzenextruders 106. Einrichtungen, die einem bestimmten Segment 106a, 106b, 106c oder 106d zugeordnet sind, sind in Fig. 1 durch einen Buchstaben gekennzeichnet, der dem Buchstaben entspricht, mit dem das Segment gekennzeichnet ist. Der Planetwalzenextruder 106 wird mittels induktiver Erwärmung auf die Depolymerisationstemperatur erwärmt, die in einem Bereich von 380 bis 600 °C, vorzugsweise von 450 bis 480 °C liegt.

Das geschmolzene Material 1 ist das Aufgabematerial. Es wurde aus dem zerkleinerten Kunststoffmaterial durch Erwärmen auf die Vorschmelztemperatur in einer Schmelzeinrichtung (nicht gezeigt) vorbehandelt. Das geschmolzene Material 1 wird mittels einer Rohrleitung zu dem ersten Segment 106a des Planetwalzenextruders 106 geführt, in das es über einen Eintrag 102, der in dem ersten Segment 106a ausgebildet ist, eingetragen wird. Im ersten Segment 106a des Planetwalzenextruders 106 ist außerdem ein Eintrag 104 für Zusätze 2 sowie eine Vakuumentgasung 105 für Wasserdampf und flüchtige Bestandteile 3 vorgesehen. Der Eintrag 102, der Eintrag 104 und die Vakuumentgasung 105 sind im Mantel des Zylinders 109 des Planetwalzenextruders 106 ausgebildet. Der Eintrag 104 kann ein sogenannter "Side Feeder" sein.

Für jedes Segment 106a, 106b, 106c, 106d des Planetwalzenextruders 106 ist ein Inverter 111 vorgesehen, in welchem die für die induktive Beheizung erforderliche Stromfrequenz erzeugt wird. Für jedes Segment 106a, 106b, 106c, 106d des Planetwalzenextruders 106 ist ferner ein Induktor 112 vorgesehen, auf den der Inverter 111 elektrische Energie 4 überträgt und welcher die erforderliche Wärmeenergie direkt in den Zylinder 109, der die Reaktorwand des Planetwalzenextruders 106 bildet, erzeugt. Der Induktor kann eine oder mehrere Spulen aufweisen, die um den äußeren Zylinder 109 gewendelt sind. In der beschriebenen ersten Ausführungsform überträgt jeder Induktor 112 eine Leistung von 10 bis 100 kW thermischer Energie auf das jeweilige Segment 106a, 106b, 106c oder 106d des Planetwalzenextruders 106. Bei den Invertern 111 kann es sich um Module handeln. Bei den Induktoren 112 kann es sich um Module handeln.

Das im Innenraum 110 des Planetwalzenextruders 106 durch die Rotation der Planetspindeln 108 um deren Drehachsen vom Eingang des Planetwalzenextruders 106 zu dessen Ausgang beförderte Material wird bei der Depolymerisationstemperatur in ein Gemisch aus Öldampf und der weiteren Komponente, bei der es sich um Schlacke handeln kann, überführt. Die Schlacke besteht im Wesentlichen aus nicht verdampften Feststoffen und Bitumen. Das Gemisch aus Öldampf und der weiteren Komponente tritt am Ausgang des Planetwalzenextruders 106 unmittelbar in eine Trennkammer 113 ein. Die Trennkammer 113 grenzt an das vierte Segment 106d an.

In der Trennkammer 113 trennt sich das Gemisch in eine gasförmige Phase, die von dem Öldampf gebildet ist, und eine vorwiegend feste Phase, die von der Schlacke gebildet ist. Die Schlacke 5 wird mittels einer gekühlten Schnecke aus der Trennkammer 113 an einem ersten Austrag 120 ausgetragen. Der Öldampf 6 verlässt die Trennkammer 113 an einem zweiten Ausgang über eine Rohrleitung 114, in der er zu einer Kühleinrichtung 115 geführt wird, bei der es sich beispielsweise um einen Wärmetauscher, einen Kondensator, eine Destillationskolonne oder einen Quench-Kühler handeln kann. In der Kühleinrichtung wird der Öldampf auf die Abkühltemperatur abgekühlt, wodurch er in eine Gasphase, bei der es sich um Gase und Leichtsieder 7 handelt, und eine flüssige Phase, bei der es sich um die als Öl anfallenden Mitteldestillate 8 handelt, getrennt wird. Die Mitteldestillate 8 verlassen die Kühleinrichtung 115 über die Rohrleitung 118. Die Gase und Leichtsieder 7 verlassen die Kühleinrichtung 115 über die Rohrleitung 117, in der sie zu einem Blockheizkraftwerk 119 geführt werden.

Die in der Kühleinrichtung 115 anfallende Wärme wird über einen als Wärmetauscher dienenden Kühlkreislauf 116 zurückgewonnen. Die Wärme kann zum Beispiel zum Trocknen, Aufschmelzen oder Heißwaschen des geschmolzenen Materials verwendet werden.

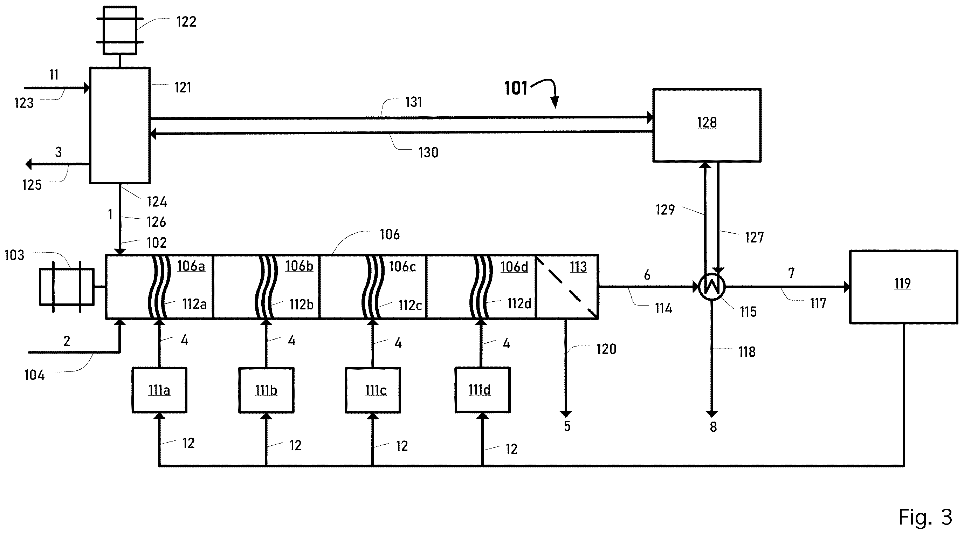

Die in Fig. 3 gezeigte zweite Ausführungsform einer erfindungsgemäßen Anlage 101 weist einen Schmelzextruder 121 mit einem Antrieb 122 auf. Der Schmelzextruder 121 weist einen Eintrag 123 auf, über den zerkleinertes Kunststoffmaterial 11 in den Schmelzextruder 121 eingebracht wird. Das zerkleinerte Kunststoffmaterial 11 ist das Aufgabematerial. Im Schmelzextruder 121 wird das zerkleinerte Kunststoffmaterial 11 unter Erhalt des geschmolzenen Materials 1 auf die Vorschmelztemperatur erwärmt. Das geschmolzene Material 1 verlässt den Schmelzextruder 121 an einem Austrag 124 und wird über eine Rohrleitung 126 zu dem Eintrag 102 des Planetwalzenextruders 106 geführt. Der Schmelzextruder 121 weist ferner eine Entgasung 125 für Wasserdampf und flüchtige Bestandteile 3 auf, die im Schmelzextruder 121 aus dem zerkleinerten Kunststoffmaterial abgetrennt werden und über die Entgasung 125 aus dem Schmelzextruder 121 herausgeführt werden. Bei der Entgasung 125 kann es sich um atmosphärische Entgasung oder eine Vakuumentgasung handeln.

Der Planetwalzenextruder 106 der zweiten Ausführungsform entspricht dem in Fig. 1 gezeigten Planetwalzenextruder, außer dass keine Vakuumentgasung 105 vorgesehen ist. Über den Eintrag 102 tritt das geschmolzene Material 1 in das erste Segment 106a des Planetwalzenextruders 106 ein. Für jedes Segment 106a, 106b, 106c, 106d des Planetwalzenextruders 106 ist ein Inverter 111 vorgesehen, in welchem die für die induktive Beheizung erforderliche Stromfrequenz erzeugt wird. Für jedes Segment 106a, 106b, 106c, 106d des Planetwalzenextruders 106 ist ferner ein Induktor 112 vorgesehen, auf den der Inverter 111 elektrische Energie 4 überträgt und welcher die erforderliche Wärmeenergie direkt in dem Zylinder 109, der die Reaktorwand des Planetwalzenextruders 106 bildet, erzeugt. Der Induktor kann eine oder mehrere Spulen aufweisen, die um den äußeren Zylinder 109 gewendelt sind. In der beschriebenen zweiten Ausführungsform überträgt jeder Induktor 112 eine Leistung von 10 bis 100 kW thermischer Energie auf das jeweilige Segment 106a, 106b, 106c oder 106d des Planetwalzenextruders 106.

Das im Innenraum 110 des Planetwalzenextruders 106 durch die Rotation der Planetspindeln 108 um deren Drehachsen vom Eingang des Planetwalzenextruders 106 zu dessen Ausgang beförderte Material wird bei der Depolymerisationstemperatur in ein Gemisch aus Öldampf und der weiteren Komponente, bei der es sich um Schlacke handeln kann, überführt. Die Schlacke besteht im Wesentlichen aus nicht verdampften Feststoffen und Bitumen. Das Gemisch aus Öldampf und der weiteren Komponente tritt am Ausgang des Planetwalzenextruders 106 unmittelbar in eine Trennkammer 113 ein. Die Trennkammer 113 grenzt an das vierte Segment 106d an.
Auch die Trennkammer 113 der zweiten Ausführungsform entspricht der in Fig. 1 gezeigten Trennkammer. In der Trennkammer 113 trennt sich das Gemisch in eine gasförmige Phase, die von dem Öldampf gebildet ist, und eine vorwiegend feste Phase, die von der Schlacke gebildet ist. Die Schlacke 5 wird mittels einer gekühlten Schnecke aus der Trennkammer 113 an einem ersten Austrag 120 ausgetragen. Der Öldampf 6 verlässt die Trennkammer 113 an einem zweiten Ausgang über eine Rohrleitung 114, in der er zu einer Kühleinrichtung 115 geführt wird, bei der es sich beispielsweise um einen Wärmetauscher handeln kann. In der Kühleinrichtung wird der Öldampf auf die Abkühltemperatur abgekühlt, wodurch er in eine Gasphase, bei der es sich um Gase und Leichtsieder 7 handelt, und eine flüssige Phase, bei der es sich um die als Öl anfallenden Mitteldestillate 8 handelt, getrennt wird. Die Mitteldestillate 8 verlassen die Kühleinrichtung 115 über die Rohrleitung 118. Die Gase und Leichtsieder 7 verlassen die Kühleinrichtung 115 über die Rohrleitung 117, in der sie zu einem Blockheizkraftwerk 119 geführt werden. Die im Blockheizkraftwerk 119 durch Verbrennen der Gase und Leichtsieder 7 gewonnene elektrische Energie 12 kann zur Versorgung der Inverter 11 1a, 11 1b, 11 1c, 11 1d eingesetzt werden.

Die zweite Ausführungsform der erfindungsgemäßen Anlage 101 weist eine Thermoöl-Anlage 128 auf. Mittels der Thermoöl-Anlage 128 wird das flüssige Kondensat in der Kühleinrichtung 115 auf die Abkühltemperatur temperiert. Dazu sind eine Rohrleitung 127 zum Führen des Thermoöls von der Thermoöl-Anlage 128 zu der Kühleinrichtung 115 und eine Rohrleitung 129 zum Führen des Thermoöls von der Kühleinrichtung 115 zu der Thermoöl-Anlage 128 vorgesehen. Mittels der Thermoöl-Anlage 128 wird ferner der Schmelzextruder 121 auf die Vorschmelztemperatur temperiert. Dazu sind eine Rohrleitung 130 zum Führen des Thermoöls von der Thermoöl-Anlage 128 zu dem Schmelzextruder 121 und eine Rohrleitung 131 zum Führen des Thermoöls von dem Schmelzextruder 121 zu der Thermoöl-Anlage 128 vorgesehen. Mittels der Thermoöl-Anlage 128 kann die Abkühltemperatur präzise gesteuert werden. Die Thermoöl-Anlage 128 ermöglicht eine Nutzung der bei der Depolymerisation im Planetwalzenextruder 106 anfallenden Prozesswärme zum Erwärmen des zerkleinerten Kunststoffmaterials 11 auf die Vorschmelztemperatur.

### Bezugszeichenliste

- 1: geschmolzenes Material
- 2: Zusätze
- 3: Wasserdampf und flüchtige Bestandteile
- 4: elektrische Energie
- 5: Schlacke
- 6: Öldampf
- 7: Gas und Leichtsieder
- 8: Mitteldestillate
- 11: zerkleinertes Kunststoffmaterial
- 12: elektrische Energie

- 101: Anlage
- 102: Eintrag
- 103: Antrieb
- 104: Eintrag
- 105: Vakuumentgasung für Wasserdampf und flüchtige Bestandteile
- 106: Planetwalzenextruder, Module a bis d
- 107: Zentralspindel
- 108: Planetspindel
- 109: Zylinder
- 110: Innenraum
- 111: Inverter, Module a bis d
- 112: Induktor, Module a bis d
- 113: Trennkammer
- 114: Rohrleitung
- 115: Kühleinrichtung
- 116: Kühlkreislauf
- 117: Rohrleitung
- 118: Rohrleitung
- 119: Blockheizkraftwerk
- 120: Austrag

- 121: Schmelzextruder
- 122: Antrieb
- 123: Eintrag
- 124: Austrag
- 125: Entgasung für Wasserdampf und flüchtige Bestandteile
- 126: Rohrleitung
- 127: Rohrleitung
- 128: Thermoöl-Anlage
- 129: Rohrleitung
- 130: Rohrleitung
- 131: Rohrleitung

## Patentansprüche

1. Verfahren zur Depolymerisation von Kunststoffmaterial, wobei das Verfahren die Schritte umfasst:
(a) Schmelzen des Kunststoffmaterials unter Erhalt eines geschmolzenen Materials (1);
(b) Eintragen des geschmolzenen Materials (1) in einen Planetwalzenextruder (106);
(c) Erwärmen des geschmolzenen Materials in dem Planetwalzenextruder (106) unter Erhalt von Öldampf (6); und
(d) Abkühlen des Öldampfes (6).

2. Verfahren nach Anspruch 1, **dadurch gekennzeichnet, dass** in Schritt (c) die Erwärmung mittels induktiver Beheizung des Planetwalzenextruders (106) erfolgt.

3. Verfahren nach Anspruch 1 oder Anspruch 2, **dadurch gekennzeichnet, dass** das Kunststoffmaterial ein zerkleinertes Kunststoffmaterial (11) ist.

4. Verfahren nach einem der vorstehenden Ansprüche, **dadurch gekennzeichnet, dass** Schritt (a) in einer Schmelzeinrichtung (121) durchgeführt wird.

5. Verfahren nach einem der vorstehenden Ansprüche, **dadurch gekennzeichnet, dass** in Schritt (c) das geschmolzene Material (1) auf eine Temperatur von 380 bis 600 °C erwärmt wird.

6. Verfahren nach einem der vorstehenden Ansprüche, **dadurch gekennzeichnet, dass** in Schritt (c) das geschmolzene Material (1) mittels des Planetwalzenextruders (106) durchmischt wird.

7. Verfahren nach einem der vorstehenden Ansprüche, **dadurch gekennzeichnet, dass** in Schritt (c) das geschmolzene Material mittels des Planetwalzenextruders (106) kontinuierlich transportiert wird.

8. Verfahren nach einem der vorstehenden Ansprüche, **dadurch gekennzeichnet, dass** in Schritt (c) ein Gemisch erhalten wird, das Öldampf (6) enthält, wobei das Gemisch im Anschluss an Schritt (c) und vor Schritt (d) in eine Trenneinrichtung (113) zur Abtrennung des Öldampfes (6) aus dem Gemisch geführt wird.

9. Verfahren nach einem der vorstehenden Ansprüche, **dadurch gekennzeichnet, dass** Schritt (d) in einer Kühleinrichtung (115) durchgeführt wird.

10. Anlage zur Depolymerisation von Kunststoffmaterial, wobei die Anlage (101) einen Planetwalzenextruder (106) zur Erwärmung des Kunststoffmaterials unter Erhalt von Öldampf (6) aufweist und wobei der Planetwalzenextruder (106) eine induktive Beheizung aufweist.

11. Anlage nach Anspruch 10, **dadurch gekennzeichnet, dass** der Planetwalzenextruder (106) einen Zylinder (109) aufweist, in dem eine Zentralspindel (107) und zumindest drei Planetspindeln (108) angeordnet sind, wobei an der Außenwand des Zylinders (109) eine oder mehrere Induktionsspulen angeordnet sind.

12. Anlage nach Anspruch 10 oder Anspruch 11, **dadurch gekennzeichnet, dass** der Planetwalzenextruder (106) zwei oder mehr Reaktionszonen aufweist.

13. Anlage nach Anspruch 12, **dadurch gekennzeichnet, dass** er folgende Reaktionszonen aufweist:
(i) eine Aufwärmzone zum Erwärmen des geschmolzenen Materials (1);
(ii) eine Depolymerisationszone zum Spalten von Polymerketten des geschmolzenen Materials (1) unter Erhalt von kürzeren Molekülen;
(iii) eine Verdampfungszone zum Verdampfen der in der Depolymerisationszone erhaltenen kürzeren Moleküle zu einem Öldampf (6); und
(iv) eine Austragszone zum Austragen des Öldampfes (6) aus dem Planetwalzenextruder (106).

14. Anlage nach einem der Ansprüche 10 bis 13, **dadurch gekennzeichnet, dass** sie eine Kühleinrichtung (115) zum Abkühlen des Öldampfes unter Erhalt eines Öls aufweist.

15. Anlage nach einem der Ansprüche 10 bis 14, **dadurch gekennzeichnet, dass** sie eine Einrichtung (121) zum Schmelzen des Kunststoffmaterials vor dessen Eintritt in den Planetwalzenextruder (106) aufweist.

## Claims

1. A method for the depolymerization of a plastic material, the method comprising the steps of:
(a) melting the plastic material to obtain a molten material (1);
(b) feeding the molten material (1) into a planetary mill extruding machine (106);
(c) heating the molten material in the planetary mill extruding machine (106) to obtain oil steam (6); and
(d) cooling the oil steam (6).

2. The method according to claim 1, **characterized in that** in step (c) heating is performed by means of induction-heating the planetary mill extruding machine (106).

3. The method according to claim 1 or claim 2, **characterized in that** the plastic material is a grinded plastic material (11).

4. The method according to any of the preceding claims, **characterized in that** step (a) is carried out in a melting facility (121).

5. The method according to any of the preceding claims, **characterized in that** in step (c) the molten material (1) is heated to a temperature of 380 to 600°C.

6. The method according to any of the preceding claims, **characterized in that** in step (c) the molten material (1) is intermixed by means of the planetary mill extruding machine (106).

7. The method according to any of the preceding claims, **characterized in that** in step (c) the molten material is continuously transported by means of the planetary mill extruding machine (106).

8. The method according to any of the preceding claims, **characterized in that** in step (c) a mixture is obtained that contains oil steam (6), wherein the mixture subsequently to step (c) and before step (d) is transferred into a separating facility (113) for separating the oil steam (6) from the mixture.

9. The method according to any of the preceding claims, **characterized in that** step (d) is carried out in a cooling facility (115).

10. A plant for the depolymerization of a plastic material, wherein the plant (101) has a planetary mill extruding machine (106) for heating the plastic material to obtain oil steam (6) and wherein the planetary mill extruding machine (106) has an induction heater.

11. The plant according to claim 10, **characterized in that** the planetary mill extruding machine (106) has a cylinder (109), in which one central spindle (107) and at least three planetary spindles (108) are arranged, wherein one or more induction coils are arranged on the outer wall of the cylinder (109).

12. The plant according to claim 10 or claim 11, **characterized in that** the planetary mill extruding machine (106) has two or more reaction zones.

13. The plant according to claim 12, **characterized in that** it has the following reaction zones:
(i) a heating zone for heating the molten material (1);
(ii) a depolymerization zone for cleaving polymer chains of the molten material (1) to obtain shorter molecules;
(iii) an evaporation zone for evaporating the shorter molecules obtained in the depolymerization zone to an oil steam (6); and
(iv) a discharging zone for discharging the oil steam (6) from the planetary mill extruding machine (106).

14. The plant according to any of claims 10 to 13, **characterized in that** is has a cooling facility (115) for cooling the oil steam to obtain an oil.

15. The plant according to any of claims 10 to 14, **characterized in that** is has a facility (121) for melting the plastic material before it enters the planetary mill extruding machine (106).

## Revendications

1. Procédé de dépolymérisation de matériau plastique, le procédé étant composé des étapes :
(a) Fusion du matériau plastique pour obtenir un matériau fondu (1) ;
(b) Introduction du matériau fondu (1) dans une extrudeuse à vis planétaires (106) ;
(c) Chauffage du matériau fondu dans l'extrudeuse à vis planétaires (106) pour obtenir de la vapeur d'huile (6) ; et
(d) Refroidissement de la vapeur d'huile (6).

2. Procédé selon la revendication 1, **caractérisé en ce que** dans l'étape (c), le chauffage est effectué au moyen de chauffage inductif de l'extrudeuse à vis planétaires (106).

3. Procédé selon la revendication 1 ou la revendication 2, **caractérisé en ce que** le matériau plastique est un matériau plastique broyé (11).

4. Procédé selon l'une des revendications précédentes **caractérisé en ce que** l'étape (a) est effectuée dans un dispositif de fusion (121).

5. Procédé selon l'une des revendications précédentes **caractérisé en ce que** dans l'étape (c), le matériau fondu (1) est chauffé à une température de 380 à 600 °C.

6. Procédé selon l'une des revendications précédentes **caractérisé en ce que** dans l'étape (c), le matériau fondu (1) est mélangé au moyen de l'extrudeuse à vis planétaires (106).

7. Procédé selon l'une des revendications précédentes **caractérisé en ce que** dans l'étape (c), le matériau fondu est transporté en continu au moyen de l'extrudeuse à vis planétaires (106).

8. Procédé selon l'une des revendications précédentes **caractérisé en ce que** dans l'étape (c), un mélange est obtenu, qui contient de la vapeur d'huile (6), ledit mélange étant conduit suite à l'étape (c) et avant l'étape (d) dans un dispositif de séparation (113) aux fins de séparer la vapeur d'huile (6) du mélange.

9. Procédé selon l'une des revendications précédentes **caractérisé en ce que** l'étape (d) est effectuée dans un dispositif de refroidissement (115).

10. Installation pour la dépolymérisation de matériau plastique, l'installation (101) présentant une extrudeuse à vis planétaires (106) pour le chauffage du matériau plastique pour obtenir de la vapeur d'huile (6) et l'extrudeuse à vis planétaires (106) présentant un chauffage inductif.

11. Installation selon la revendication 10 **caractérisée en ce que** l'extrudeuse à vis planétaires (106) comprend un cylindre (109), dans lequel sont disposés une broche centrale (107) et au minimum trois broches planétaires (108), une ou plusieurs bobines d'induction étant disposées sur la paroi extérieure du cylindre (109).

12. Installation selon la revendication 10 ou la revendication 11 **caractérisée en ce que** l'extrudeuse à vis planétaires (106) comprend deux ou plusieurs zones de réaction.

13. Installation selon la revendication 12 **caractérisée en ce qu'**elle comprend les zones de réactions suivantes :
(i) une zone de chauffage pour chauffer le matériau fondu (1) ;
(ii) une zone de dépolymérisation pour casser les chaînes de polymère du matériau fondu (1) pour obtenir des molécules plus courtes ;
(iii) une zone d'évaporation pour l'évaporation des molécules plus courtes obtenues dans la zone de dépolymérisation en une vapeur d'huile (6) ; et
(iv) une zone de décharge pour décharger la vapeur d'huile (6) de l'extrudeuse à vis planétaires (106).

14. Installation selon l'une des revendications 10 à 13 **caractérisée en ce qu'**elle comprend un dispositif de refroidissement (115) pour refroidir la vapeur d'huile pour obtenir une huile.

15. Installation selon l'une des revendications 10 à 14 **caractérisée en ce qu'**elle comprend un dispositif (121) pour faire fondre le matériau plastique avant qu'il n'entre dans l'extrudeuse à vis planétaires (106).
